# EUROPÄISCHE PATENTSCHRIFT

(11) **EP 1 287 283 B1**
(45) Veröffentlichungstag und Bekanntmachung des Hinweises auf die Patenterteilung: **15.09.2004**
(21) Anmeldenummer: 01947201.8
(22) Anmeldetag: 04.06.2001
(51) Int. Cl.: F16L 37/56, F16L 37/58

(54) **VERBINDUNGSELEMENT ZUM MECHANISCHEN VERBINDEN VON BAUTEILEN**
CONNECTING ELEMENT FOR MECHANICALLY CONNECTING COMPONENTS
ELEMENT D'ASSEMBLAGE PERMETTANT LA JONCTION MECANIQUE DE COMPOSANTS

(30) Priorität: 04.06.2000 DE 10026769
(43) Veröffentlichungstag der Anmeldung: 05.03.2003
(73) Patentinhaber: Prochiner, Frank, 72760 Reutlingen (DE)
(72) Erfinder: Prochiner, Frank, 72760 Reutlingen (DE)
(74) Vertreter: Späth, Dieter, Dipl.-Ing.
(86) Internationale Anmeldenummer: PCT/DE2001/002166
(87) Internationale Veröffentlichungsnummer: WO 2001/096776

(56) Entgegenhaltungen:
- CH-A- 419 873
- GB-A- 2 180 903
- US-A- 3 977 703
- US-A- 4 993 564

## Beschreibung

Die Erfindung betrifft eine Verbindungsanordnung zum effektiven Verbinden von Hausbau-Bauteilen oder -Baugruppen, wie z. B. Wand-, Decken und Fußbodenelemente, wie sie beim Fertigteil-Hausbau verwendet werden. Unter Fertigteil-Hausbau werden sowohl Gebäude verstanden, die für längere Zeit stehen sollen, als auch Gebäude, die nur für eine relativ kurze Zeit genutzt werden, wie z. B. Gebäude für Notunterkünfte nach einem Erdbeben, für militärische Nutzungen, für Messebauten usw.

Zum Verbinden von Wand-, Decken- und Fußbodenelementen sind aus dem Fertigteil-Hausbau verschiedene Verbindungskonstruktionen bekannt. So werden Wandelemente häufig zusammengesteckt und danach die Steckverbindungen verschraubt. Zunehmend werden auch im Fertigteil-Hausbau sogenannte Beschläge eingesetzt, die an die zu verbindenden Stellen geschraubt werden. Beschläge sind aus dem Stand der Technik hinreichend bekannt, so dass lediglich beispielhaft auf das Dokument US 5,284,311 verwiesen wird.

Aus der US-A-4,993,564 ist eine zweiteilige Schnellkupplung zum lösbaren Anschluss von flüssigkeitsführenden Leitungen an eine Versorgungsleitung bekannt, die zwei mittels Exzenternocken miteinander verbindbare Kupplungshälften aufweist. Elektrische Leitungen können in die Kupplungshälften integriert sein. Die bekannte Schnellkupplung ist zum Schnellwechsel einer Baggerschaufel vorgesehen und zum Verbinden von Fertigteil-Hausbauelementen nicht geeignet.

Es kommt auch zukünftig darauf an, den Arbeitsaufwand vor Ort zu minimieren, denn vor Ort muss in der Regel mit ortsansässigen Arbeitskräften gearbeitet werden, die unter Umständen schlecht ausgebildet oder teuer sind. Weiterhin gibt es vor Ort kaum Möglichkeiten für eine Montageautomatisierung, wodurch die vor Ort entstehenden Kosten nur schwer zu senken sind. Ein weiteres Problem ist die Bauzeit, die bei aufwendiger Handmontage von Wandelementen nur begrenzt verkürzt werden kann.

Somit besteht das Problem darin, daß beim Fertigteil-Hausbau die Herstellung der Bauteile mit einem hohen Automatisierungsgrad erfolgen kann und auch eine hohe Fertigungsqualität erreichbar ist, im Gegensatz dazu jedoch bei der Montage der Fertigteilelemente vor Ort die Montagegeschwindigkeit und die Qualität der Arbeit nur wenig beeinflußbar sind.

Es besteht jedoch das permanente Bedürfnis, die Baukosten zu senken und die Qualität von Montage-Bauwerken zu verbessern, wobei unter dem Begriff Montage-Bauwerk jede Art von Bauwerk verstanden wird, das aus vorgefertigten Elementen vor Ort zusammengefügt wird, wobei die dazu erforderlichen Arbeiten im wesentlichen durch qualifizierte Arbeitskräfte von Hand ausgeführt werden.

Die Erfindung betrifft gleichermaßen eine Vorrichtung zum effektiven Verbinden von Baugruppen unterschiedlichster Ausführungsformen an Wand-, Dekken- und Fußbodenflächen von Gebäuden oder Gerüsten. Die nachfolgende Aufzählung von Baugruppen ist nicht vollständig und soll lediglich dazu dienen, das breite Anwendungsspektrum der Erfindung aufzuzeigen:
Baugruppen aus dem Bereich Heizung, Lüftung, Klima:
   Wandheizkörper, Küchenblock mit Gas- oder Elektroherd, Backofen, Klimaaggregat für Wandmontage, Haustechnikmodul mit Warmwasserspeicher, Warmwassererzeugungseinheit und div. Zusatzgeräten, wie z. B. Wasserfilter.
Baugruppen aus dem Sanitärbereich:
   Module mit Waschbecken, WC oder Duschkabine.

Ähnlich wie bei der Erstellung von Fertigteilgebäuden besteht auch bei den vorstehend erwähnten Baugruppen das Problem der effektiven und zuverlässigen Montage vor Ort, insbesondere in dem Fall, wenn die Baugruppen eine Vielzahl von Verbindungsstellen und Anschlüssen aufweisen, wie z. B. für Wasser, Gas, Strom oder/und Telefon sowie Datenverarbeitungseinrichtungen. Da die Komplexität der Baugruppen weiter zunimmt, sind bei der Installation vor Ort Facharbeiter mit hoher Qualifikation erforderlich. Dadurch steigen die Montagekosten. Der Verzicht auf qualifiziertes Personal führt zu erhöhtem Ausfall z. B. durch elektrische oder signaltechnische Fehlschaltungen, deren Beseitigung ebenfalls hohe Kosten verursacht.

Es ist daher die Aufgabe der vorliegenden Erfindung, die Montage von Bauteilen und Baugruppen im Bereich Bauwesen zu effektivieren, so daß auch weniger qualifizierte Arbeitskräfte komplizierte Montagearbeiten schnell und fehlerfrei ausführen können.

Diese Aufgabe wird mit einer Vorrichtung nach Anspruch 1 gelöst.

Es wird ein Verbindungselement zum mechanischen Verbinden von Bauteilen oder Baugruppen bereitgestellt, wobei das Verbindungselement zwei durch eine Fügebewegung in Eingriff und betriebsfertigen Zustand bringbare Kupplungshälften aufweist. Diese Kupplungshälften sind an den zu verbindenden Bauteilen oder Baugruppen mittels Befestigungsmittel, wie z. B. Schrauben oder Klebstoff, befestigbar. Die Kupplungshälften und die Befestigungshilfsmittel sind so dimensioniert, daß beim Einwirken von betriebsmäßig auftretenden Kräften der mechanisch stabile Zustand der verbundenen Bauteile oder Baugruppen für einen langen Zeitraum gewährleistet bleibt. Innerhalb der Kupplungshälften sind Leitungskupplungshälften angeordnet. Diese Leitungskupplungshälften dienen zum Verbinden von Flüssigkeitsleitungen oder Gasleitungen oder elektrischen Leitungen oder Signalleitungen, wie z. B. für Telefon- oder Videoeinrichtungen. Die Leitungskupplungshälften sind mit den Enden der Leitungen verbunden. Die Leitungen werden durch Ausnehmungen hindurch nach außen oder innerhalb des Bauteils oder der Baugruppe geführt.

Erfindungsgemäß sind die Kupplungshälften im betriebsbedingten Verbundzustand als Gehäuse der Leitungskupplungshälften ausgebildet. Das aus den zusammengesteckten Kupplungshälften ausgebildete Gehäuse ist so geformt, daß die Leitungskupplungshälften und die Endabschnitte der zu verbindenden Leitungen vor schädigenden Betriebs- oder Umwelteinflüssen geschützt sind. Da es sehr unterschiedliche Betriebs- oder Umwelteinflüsse geben kann, muß der Fachmann auf Grund der vermittelten technischen Lehre die Kupplungshälften so konstruieren, daß sie - bezogen auf den konkreten Anwendungsfall - die Leitungskupplungshälften und die Endabschnitte der zu verbindenden Leitungen ausreichend schützen. So kann es z. B. unter bestimmten Betriebsbedingungen erforderlich sein, ein hermetisch dichtes Gehäuse vorzusehen, um Korrosion an den Leitungskupplungshälften zu vermeiden. In diesem Fall sind die Leitungskupplungshälften im Verbundzustand allseitig geschlossen und können Dichtungen aufweisen, die im Verbundzustand das Eindringen von Luftfeuchtigkeit oder Wasser verhindern. Die verschiedensten Ausführungsformen solcher Abdichtungen sind dem Fachmann z. B. aus dem Bereich der Feuchtrauminstallation elektrischer Leitungen hinreichend bekannt.

Es ist darauf hinzuweisen, daß die Dimensionierung und die konstruktive Auslegung der Kupplungshälften wie folgt abläuft:
a. Dimensionierung gemäß den zu erwartenden mechanischen Betriebskräften unter Berücksichtigung der Einbauverhältnisse und des Platzbedarfs der Leitungskupplungshälften.
b. Dimensionierung gemäß den zu erwartenden schädigenden Betriebs- oder Umwelteinflüssen, wobei auch in diesem Fall die konkreten Einbaubedingungen zu berücksichtigen sind. So kann z. B. eine Kupplungshälfte trotz Dichtheitserfordernis rückseitig offen sein, wenn diese Kupplungshälfte in dem zu verbindenden Bauteil in einer Ausnehmung angeordnet wird. Die rückseitige Abdeckung und Abdichtung erfolgen in diesem Fall durch das Bauteil.

Der Grundgedanke der Erfindung besteht also darin, daß mechanische Befestigungselemente bereitgestellt werden, die Kupplungen zur Energie- und Signalversorgung aufweisen. Diese mechanischen Befestigungselemente werden wie herkömmliche Beschläge verwendet, d. h., sie werden mit Befestigungsmitteln, wie z. B. Schrauben, an den dafür vorgesehenen Stellen der zu verbindenden Bauteile oder Baugruppen befestigt. Die mechanischen Befestigungselemente sind so ausgebildet, daß die Leitungskupplungen für die Energie- und Signalleitungen im verbundenen Zustand derart eingehaust sind, daß sie vor schädigenden Einwirkungen ausreichend geschützt sind.

Der Hauptvorteil der Erfindung besteht darin, daß erstmalig ein sehr universell einsetzbarer Verbinder bereitgestellt wird, der, je nach Erfordernis, wie ein herkömmlicher Beschlag für unterschiedlichste Zwecke anwendbar ist und mit geringem Aufwand an frei wählbaren Stellen der zu verbindenden Bauteile oder Baugruppen montierbar ist. Wie auch bei herkömmlichen Beschlägen üblich, kann das erfindungsgemäße Verbindungselement in Nuten oder Sacklochbohrungen versenkt angeordnet werden.

Es ist somit nicht mehr erforderlich, die Verbindung der einzelnen Versorgungs- und Signalleitungen separat und nach dem Zusammenfügen der Bauelemente auszuführen, wodurch teure Montagezeit eingespart wird. Da für die Verbindung der Versorgungs- und Signalleitungen keine Fachkräfte mehr benötigt werden, kann die Funktionssicherheit der Verbindungsstellen wesentlich erhöht werden. Die Erfindung erweist sich besonders bei modernen Gebäuden von Vorteil, die von einem Gebäudemanagementsystem gesteuert werden. Derartige Gebäudemanagementsysteme erfordern u. a. eine Vielzahl von Sensoren, die mit elektronischen Regelvorrichtungen verbunden sind, was zu einer umfangreichen Verdrahtung führt. Wenn diese Verdrahtung bereits in die Wände, Decken usw. integriert ist und bei der Montage der Wände, Decken usw. automatisch und fehlerfrei verbunden wird, können Kosten vermindert und die Qualität erhöht werden.

Dem Fachmann ist klar, daß die allgemeine erfinderische Idee durch vielfältige Konstruktionen umgesetzt werden kann. Mit der Beschreibung der Ausführungsformen der Unteransprüche und der Ausführungsbeispiele werden wesentliche Konstruktionen aufgezeigt, so daß dem Fachmann die Erfindung ausreichend offenbart wird.

Nach Anspruch 2 ist das Verbindungselement so gestaltet, daß die Richtung der Fügebewegung der Kupplungshälften mit der Richtung der Fügebewegung der Leitungskupplungshälften übereinstimmt, d. h., beim Zusammenstecken der mechanischen Kupplungshälften werden in gleicher Richtung auch die Leitungskupplungshälften zusammengesteckt. Diese Ausführungsform weist eine einfache Konstruktion auf.

Nach Anspruch 3 ist das Verbindungselement so gestaltet, daß die Richtung der Fügebewegung der Kupplungshälften von der Richtung der Fügebewegung der Leitungskupplungshälften abweicht, d. h., daß die Richtungen der Fügebewegungen nicht übereinstimmen. Diese Ausführungsform ist dann von Vorteil, wenn konstruktive Abmessungen der zu verbindenden Teile nur eingeschränkte Platzverhältnisse zulassen, die mit einer Ausführungsform nach Anspruch 2 nicht realisierbar ist.

Nach Anspruch 4 ist das Verbindungselement so gestaltet, daß die Leitungskupplungshälften gleichzeitig mit den Kupplungshälften zusammengefügt werden, d. h., wenn die mechanischen Kupplungsschalen vollständig zusammengefügt sind, sind auch die Leitungskupplungshälften zusammengefügt. Diese Ausführungsform ermöglicht eine einfache und kostengünstige Konstruktion.

Nach Anspruch 5 ist das Verbindungselement so gestaltet, daß beim Verbinden zuerst die Kupplungshälften vollständig verbunden werden und erst danach die Leitungskupplungshälften zusammengefügt werden. Diese Ausführungsform weist unter besonders rauhen Montagebedingungen besondere Vorteile auf. So können z. B. die Leitungskupplungshälften in einer geschützten Position verbleiben, bis die Kupplungshälften vollständig geschlossen sind. Erst in einer vollständig geschützten Umhausung erfolgt das Verbinden der Leitungskupplungshälften.

Nach Anspruch 6 ist das Verbindungselement so gestaltet, daß die Leitungskupplungshälften mittels eines Verbindungsmechanismus einzeln oder gemeinsam verbindbar sind. Der Verbindungsmechanismus weist nachfolgende Merkmale auf: Einen Schlittenmechanismus, um die Leitungskupplungshälften zusammenzuführen. Unter Schlittenmechanismus versteht der Fachmann in diesem Zusammenhang eine Führung, auf der oder in der die Kupplungshälften auf einer Bahn gleiten können. Derartige Führungen bzw. Schlittenkonstruktionen sind aus einschlägigen Lehrbüchern der Konstruktionslehre entnehmbar und werden daher nicht weiter erläutert. Um den Schlittenmechanismus anzutreiben, ist ein Antriebsmechanismus vorgesehen, wobei zwei der möglichen Ausführungsformen eines Antriebsmechanismus der Gegenstand der Ansprüche 7 und 8 ist.

Nach Anspruch 7 weist der Antriebsmechanismus einen Federmechanismus auf, wobei eine blockierte, vorgespannte Feder den Schlittenmechanismus antreibt, wenn die Blockade der Feder automatisch oder von Hand gelöst wird. Eine automatische Lösung der Blockade kann z. B. dadurch erfolgen, daß ein Stift, der die Feder blockiert, beim Zusammenfügen der mechanischen Kupplungshälften verschoben wird und dadurch die Blockierung der Feder aufhebt. Derartige Konstruktionen sind entweder vollständig aus einschlägigen Lehrbüchern entnehmbar oder gehören zu ständig präsentem Fachwissen eines Konstrukteurs, der daher nicht erfinderisch tätig werden muß.

Nach Anspruch 8 ist der Antriebsmechanismus von Hand betätigbar. So kann der Antriebsmechanismus z. B. mit einem Schlüssel betätigt werden, d. h., wenn die Kupplungshälften vollständig verbunden sind, wird ein schlüsselähnliches Werkzeug in eine Ausnehmung - ähnlich einem Schlüsselloch - gesteckt. Durch Drehung des Werkzeugs wird der Schlittenmechanismus betätigt. So können die Leitungskupplungshälften zusammenfügt und auch wieder getrennt werden. Auch hier sind dem Fachmann die verschiedensten Konstruktionen zur Lösung dieser Aufgabe geläufig, wie z. B. Konstruktionen aus dem Bereich Schlösser oder einfache Anordnungen mit Zahnstange und Ritzel, wobei das Ritzel mit dem Werkzeug gedreht wird und sich dadurch die mit dem Schlittenmechanismus gekoppelte Zahnstange bewegt. Gleichermaßen sind dem Fachmann auch hydraulische oder pneumatische Lösungen geläufig, wobei durch Einbringen von Flüssigkeit oder Luft in einen Zylinder ein Kolben verschoben wird, der mit dem Schlittenmechanismus gekoppelt ist.

Nach Anspruch 9 ist das Verbindungselement so gestaltet, daß die Kupplungshälften innenseitig liegende Nuten und dazu passende Vorsprünge aufweisen, die im Verbundzustand des Verbindungselements ineinandergreifen und dazu dienen, die mechanischen Verbindungseigenschaften zu gewährleisten oder zu verbessern. Innerhalb der ineinandergreifenden Nuten und Vorsprünge sind elektrische Kontakte angeordnet. Mit dieser Ausführungsform kann der Platzbedarf für die elektrischen Leitungskupplungshälften verringert werden, da die elektrischen Kontakte integral mit der jeweiligen Kupplungshälfte verbunden sind.

Nach Anspruch 10 ist das Verbindungselement so gestaltet, daß innerhalb der Kupplungshälften Flächenabschnitte angeordnet sind, die im Verbundzustand der Kupplungshälften in enger Lagebeziehung zueinander stehen. An diesen Flächenabschnitten sind Kontaktelemente zur Herstellung einer Signalverbindung vorgesehen. Im Verbundzustand der Kupplungshälften berühren die sich gegenüberliegenden Kontaktelemente und schließen den Kontakt. Da bei der Signalverbindung nur geringe Ströme fließen, können die Kontaktelemente klein ausgebildet werden. Durch diese Ausführungsform kann der Platzbedarf für die signaltechnischen Leitungskupplungshälften verringert werden.

Nach Anspruch 11 wird ein Verbindungselement bereitgestellt, dessen Kupplungshälften einen rechteckigen Sockelabschnitt aufweisen, in dem Befestigungslöcher vorgesehen sind. Auf dem Sockelabschnitt sind keilförmige oder konische Eingriffelemente und dazu passende keilförmige oder konusförmige Ausnehmungen ausgebildet. Der Sockelabschnitt läßt sich leicht auf einer Fläche, in einer Ausnehmung oder in einer Nut befestigen. Die Ausgestaltung der Eingriffselemente kann der Fachmann frei wählen und den jeweiligen Erfordernissen anpassen, ohne daß es dazu einer erfinderischen Tätigkeit bedarf.

Nach Anspruch 12 wird ein Verbindungselement bereitgestellt, bei dem wenigstens ein Eingriffselementepaar als zusammensteckbare Rohrleitungskupplung ausgebildet ist, welche die Verbindung einer Flüssigkeitsleitung bildet. Diese Ausführungsform ist besonders kostengünstig, da durch die Doppelfunktion des Eingriffselementepaares eine separate Rohrleitungskupplung eingespart wird.

Nach Anspruch 13 ist bei den rohrförmigen Versorgungsverbindungselementen für Medien eine mittels Druck betätigbare Innenverriegelung und Innenabdichtung vorgesehen, die bei Druckbeaufschlagung mittels Flüssigkeit oder Gas eine Verriegelung und Abdichtung der Verbindung bewirken. Der Vorteil dieser Ausführungsform liegt darin, daß nach der kompletten Montage aller Medienverbindungsstellen in einem einzigen Arbeitsgang alle Medienverbindungsstellen durch die Druckausbreitung abgedichtet werden können.

Nach Anspruch 14 werden die Verbindungen wie folgt hergestellt: An den Fügepreßflächen der Verbindungsstellen ist werksseitig ein druckaktivierbarer Klebstoff aufgetragen. Derartige Klebstoffe sind dem Fachmann bekannt. Sie enthalten z. B. kleine Kügelchen, in denen Klebstoff eingebettet ist. Beim Zusammenfügen unter Druck, z. B. bei einer Flächenpressung, zerplatzen die Kügelchen und setzen den Klebstoff frei, so daß die Fügepreßflächen miteinander verklebt werden. Durch diese Maßnahme wird eine sehr stabile Verbindung erzeugt.

Nach Anspruch 15 ist auf den Fügepreßflächen, die beim Zusammenfügen in Preßkontakt sind, eine unsymmetrische Flächenverzahnung vorgesehen, die nach dem Zusammenpressen eine einseitig wirkende Kraft- und Formschlußverbindung bildet.

Es bleibt dem Fachmann überlassen, geeignete Stellen für die Anordnung der Klebeverbindung oder der Flächenverzahnung auszuwählen, da hierzu lediglich Kenntnisse der Festigkeit oder der Statik der konkreten Baukonstruktion erforderlich sind.

Nach Anspruch 16 werden die Kontakte der elektrischen Verbindungselemente gekapselt. Diese Kapseln sind als Stecker und Kupplung ausgebildet. Über den Bereich, der zusammengesteckt wird, ist jeweils eine dünne Folie gespannt, welche die elektrischen Kontakte hermetisch abschließt und dadurch den Zutritt von Feuchtigkeit und somit Korrosion verhindert. Beim Zusammenfügen von Stecker und Kupplung werden die Folien zerstört. Dies erfolgt jedoch erst, wenn durch die Verbindung von Stecker und Kupplung erneut eine hermetische Abdichtung bewirkt ist. Eine konkrete Ausführungsform wird in einem Ausführungsbeispiel beschrieben.

Nach Anspruch 17 ist in den Stecker und in die Kupplung eine feuchtigkeitsbindende Substanz eingebracht, die die Umgebungsfeuchte, die beim Zusammenfügen von Stecker und Kupplung noch eindringen kann, dauerhaft aufnimmt.

Die Erfindung wird nunmehr an Hand von Ausführungsbeispielen und ausgewählten Anwendungsbeispielen in Verbindung mit den beigefügten schematischen Zeichnungen näher erläutert.
- Fig. 1a - d: zeigen eine Prinzipdarstellung der Erfindung in einer ersten Ausführungsform.
- Fig. 2a - d: zeigen eine Prinzipdarstellung der Erfindung in einer zweiten Ausführungsform.
- Fig. 3a - d: zeigen eine Prinzipdarstellung der Erfindung in einer dritten Ausführungsform mit einer druckbetätigten Verriegelung.
- Fig. 4a - c: zeigen eine Prinzipdarstellung der Erfindung in einer vierten Ausführungsform mit einer druckaktivierbaren Klebverbindung.
- Fig. 5a, b: zeigen eine Prinzipdarstellung der Erfindung in einer fünften Ausführungsform mit Schutzfolie.
- Fig. 6a - d: zeigen eine Prinzipdarstellung der Erfindung in einer sechsten Ausführungsform mit einer kraft-formschlüssigen Rastverbindung.
- Fig. 7a, b: zeigen eine Prinzipdarstellung der Erfindung in einer siebenten Ausführungsform.

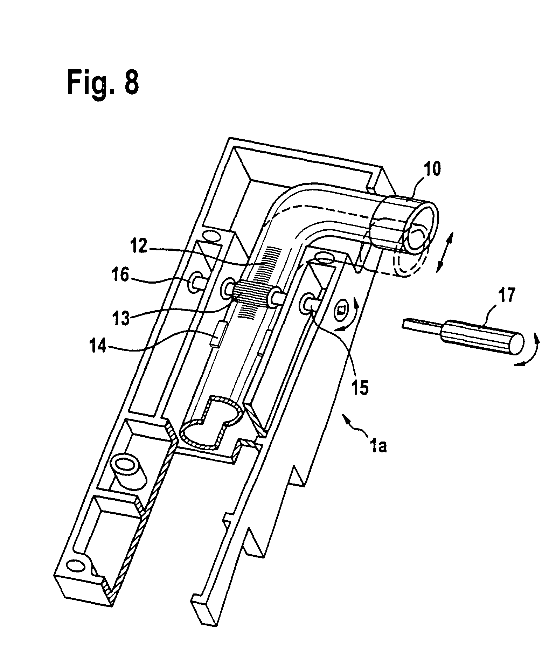

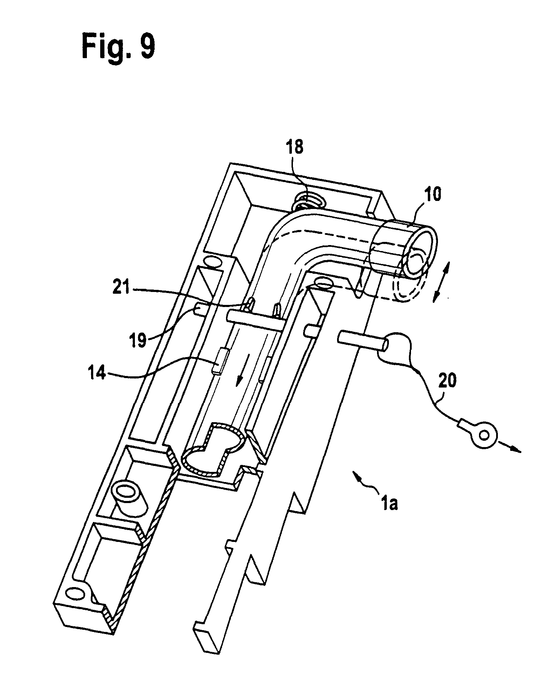

- Fig. 8, 9: gestrichen.
- Fig. 10: zeigt eine Prinzipdarstellung der Erfindung in einer zehnten Ausführungsform.
- Fig. 11a, b: zeigen eine Prinzipdarstellung der Erfindung in einer elften Ausführungsform.
- Fig. 12: zeigt eine Prinzipdarstellung der Erfindung in einer zwölften Ausführungsform.
- Fig. 13-17: zeigen Anwendungsbeispiele der Erfindung.

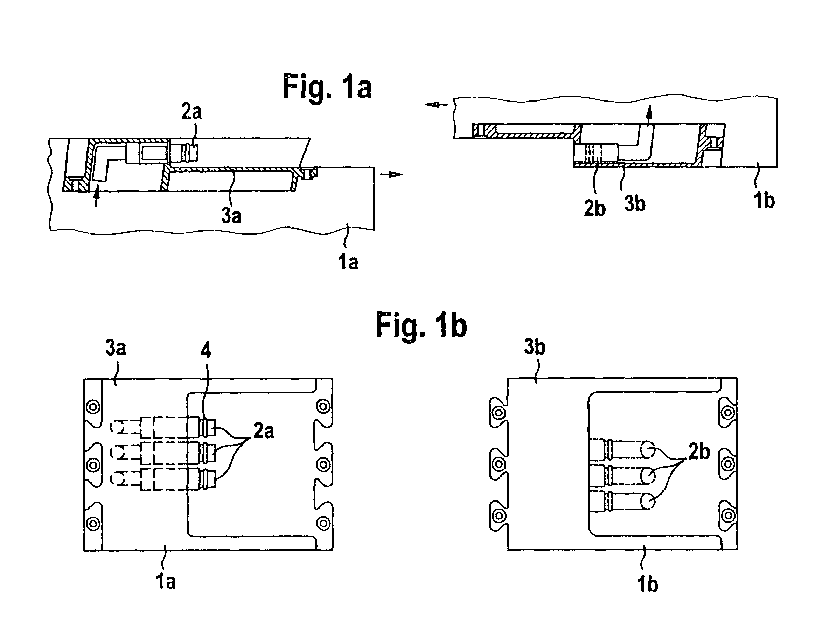

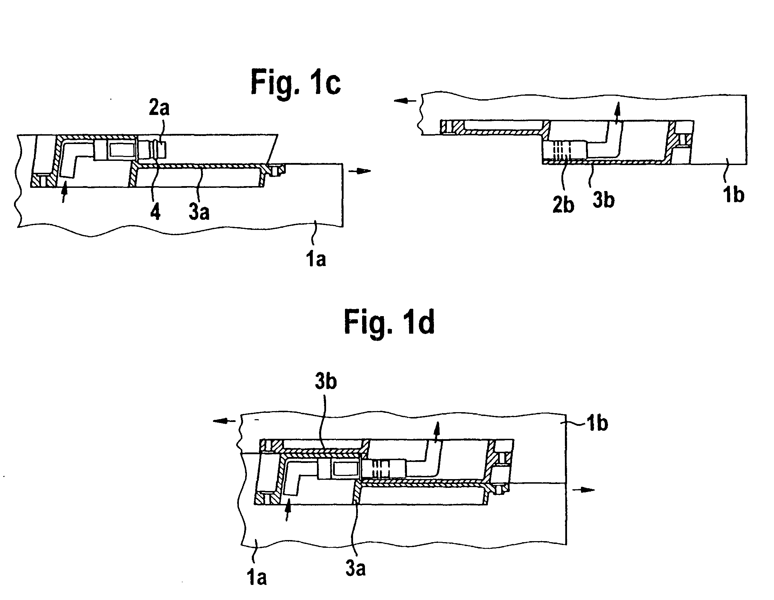

Die Fig. 1 zeigt eine Prinzipdarstellung der Erfindung in einer ersten Ausführungsform, wobei mit Bezugszeichen 1a und 1b Wandabschnitte bezeichnet sind, in denen die Leitungsverbindung angeordnet ist, die aus einer Vielzahl von Steckern 2a (Leitungskupplungshälfte) und einer dazu passenden Vielzahl von Kupplungen 2b (Leitungskupplungshälfte) besteht. Die Stecker 2a werden in einer Montage-Halterung 3a (Kupplungshälfte) und die Kupplungen 2b in einer Montage-Halterung 3b (Kupplungshälfte) gehalten. Die Montage-Halterungen werden in passenden Ausnehmungen in den Wandabschnitten befestigt. Die Ausnehmungen sind so ausgebildet, daß die Wandabschnitte ineinandergesteckt werden können und im zusammengesteckten Zustand einen geschlossenen Wandabschnitt ausbilden. Die Fig. 1a zeigt die Seitenansicht von zwei Wandabschnitten 1a und 1b mit Ausnehmungen, in denen Montage-Halterungen 3a und 3b mittels Schraubverbindungen befestigt sind. Es ist dem Fachmann klar, daß die Befestigung der Montage-Halterungen 3a und 3b auf verschiedene Art und Weise erfolgen kann, so daß auf diesbezügliche weitere Erläuterungen verzichtet werden kann. Die Fig. 1b zeigt die Draufsicht der Erfindung, wobei drei Leitungsstecker 2a und drei Leitungskupplungen 2b erkennbar sind. Im vorliegenden Beispiel erfolgt die Abdichtung zwischen dem Leitungsstecker 2a und der Leitungskupplung 2b mittels eines O-Ringes 4 Wenn die zwei Wandabschnitte 1a und 1b, wie in Fig. 1c gezeigt, in Pfeilrichtung zusammengeführt werden, gelangen die Leitungsstecker 2a und die Leitungskupplungen 2b in Eingriff. Zum Ausgleich von Fertigungstoleranzen sind die Leitungsstecker 2a oder/und die Leitungskupplungen 2b schwimmend montiert, d. h. seitlich verschiebbar. Diese Maßnahme garantiert ein zwangloses und sicheres Verbinden. Die Fig. 1d zeigt den Endzustand, bei dem die drei Leitungen zuverlässig und dicht miteinander verbunden sind. Durch bautechnische Zusatzmaßnahmen wird gewährleistet, daß die zwei Wandabschnitte 1a und 1b in der Position nach Fig. 1d gehalten werden.

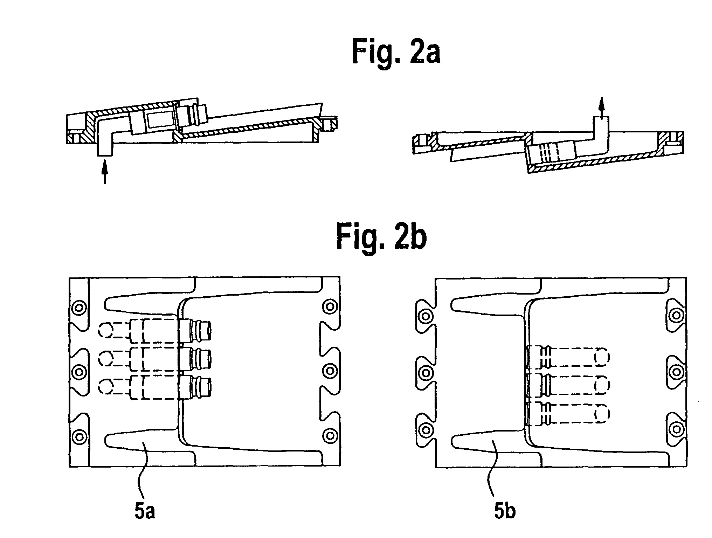

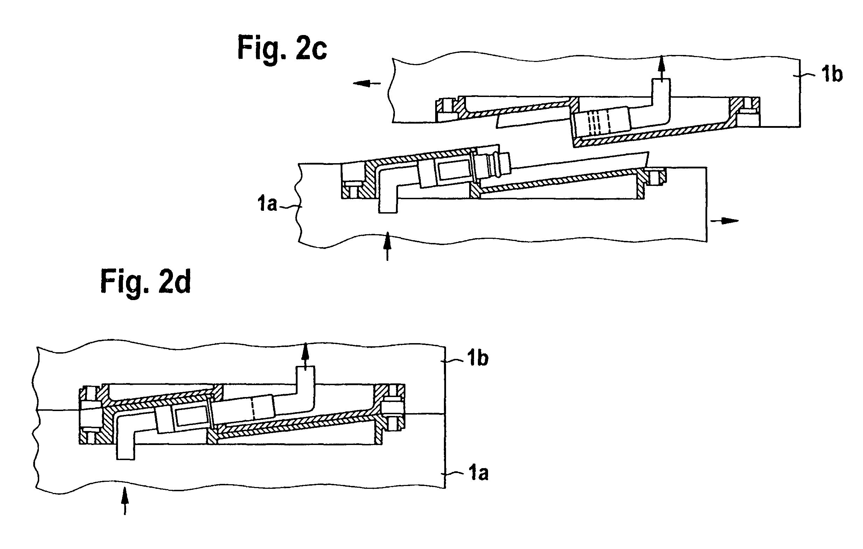

Die Fig. 2 zeigt eine Prinzipdarstellung der Erfindung in einer zweiten Ausführungsform, wobei Montage-Halterungen 3a und 3b eine Zentriervorrichtung 5a, 5b aufweisen, die ein sicheres Zusammenfügen garantiert. Die Zentriervorrichtung ist so dimensioniert, daß beim Zusammenfügen der Wände die auftretenden Querkräfte zuverlässig abgefangen werden, so daß die Kupplungshälften nicht durch verkantetes Ansetzen beschädigt werden. Die Fig. 2 ist analog zu Fig. 1, wodurch sich für den Fachmann eine nochmalige Beschreibung erübrigt.

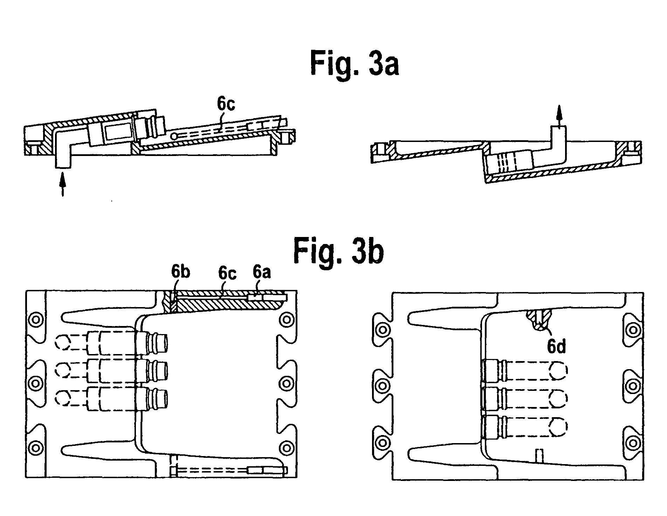

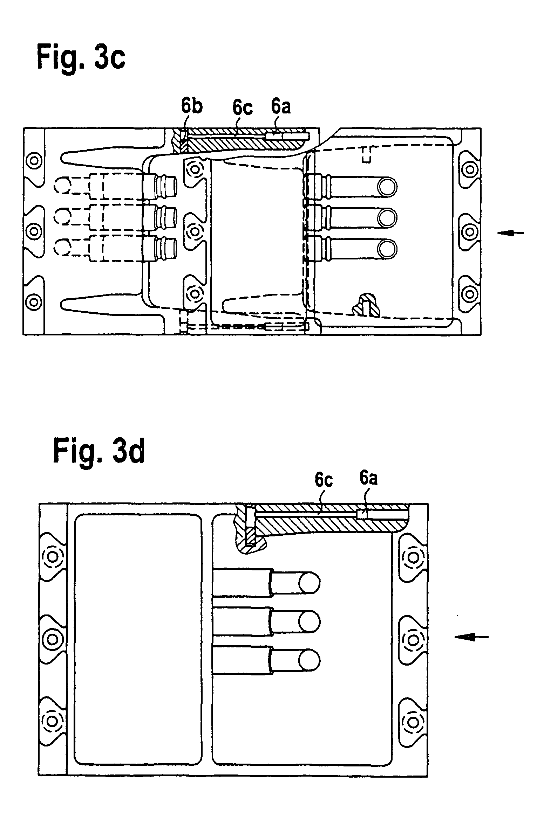

Die Fig. 3 zeigt eine Prinzipdarstellung der Erfindung in einer dritten Ausführungsform, bei der eine Verriegelungsvorrichtung 6 vorgesehen ist, die zuverlässig verhindert, daß sich die Bauteile, wie z. B. Wände, wieder lösen und somit die Kupplungshälften gelockert oder dadurch beschädigt werden, daß die Dichtheit nicht mehr gewährleistet ist. Im vorliegenden Beispiel weist die Verriegelungsvorrichtung 6 eine Druckkolben- und Zylinderanordnung 6a sowie eine Verriegelungskolben- und Zylinderanordnung 6b auf, die mittels einer Hydraulikleitung 6c miteinander verbunden sind. Wenn die Bauteile und die Kupplungshälften zuverlässig verbunden sind, wird auf den Druckkolben der Druckkolben- und Zylinderanordnung 6a eine Kraft aufgebracht, die den Kolben verschiebt, wodurch über die Hydraulikleitung 6c der Verriegelungskolben der Verriegelungskolben- und Zylinderanordnung 6b in eine Ausnehmung 6d gepreßt wird, wodurch die Bauteile fest und sicher miteinander verbunden werden. Die Krafteinleitung auf den Druckkolben kann so erfolgen, daß die beim Zusammenfügen der Bauteile aufgewendete Kraft genutzt wird. In Fig. 3d ist zu erkennen, daß der Verriegelungskolben in der Ausnehmung 6d in Eingriff gelangt ist.

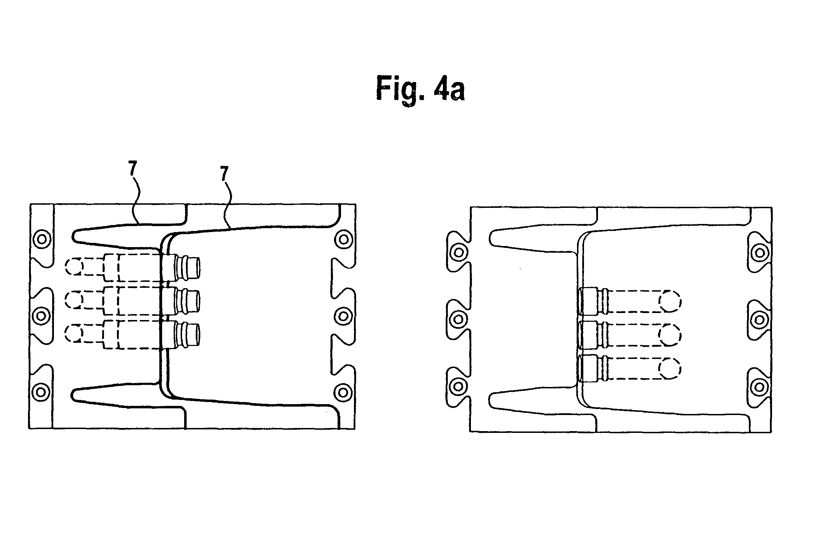

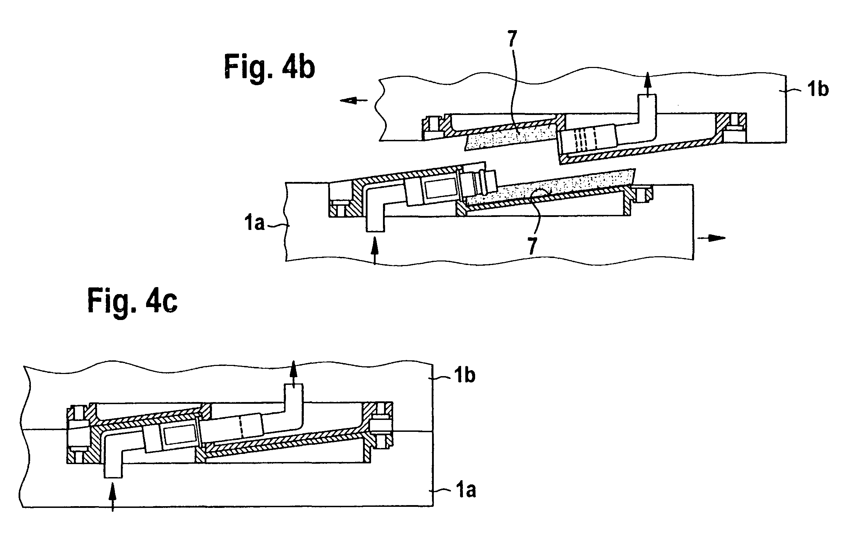

Eine Maßnahme zur Erzeugung einer dauerhaften und stabilen Verbindung wird in Fig. 4 gezeigt. Alle Berührungsflächen der Zentriervorrichtung sind mit einem speziellen Klebstoff 7 beschichtet. Wenn die Berührungsflächen unter starkem Druck zusammengepreßt werden, wird der Klebstoff 7 aktiviert und verbindet die Berührungsflächen fest miteinander. Dem Fachmann sind derartige druckaktivierbare Klebstoffe bekannt, so daß dazu keine näheren Erläuterungen erforderlich sind.

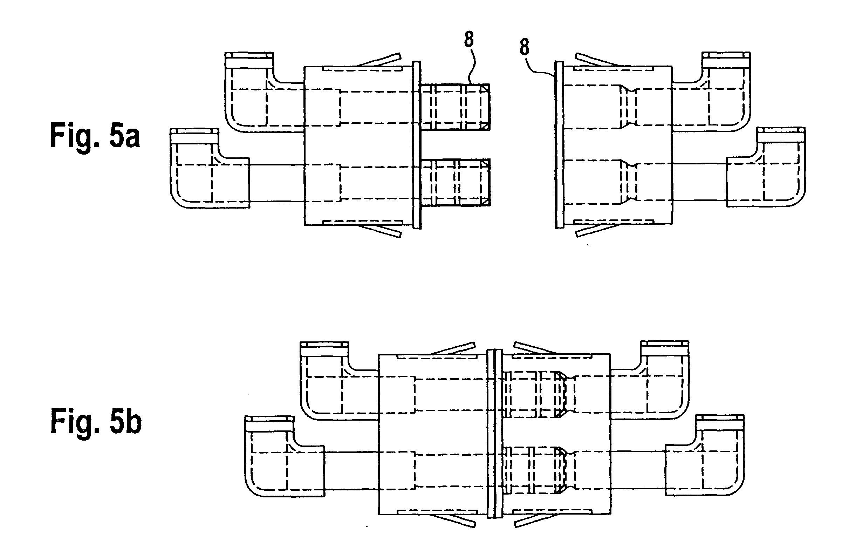

Um zu verhindern, daß die Kupplungshälften korrodieren, was z. B. bei elektrischen Verbindungen besonders nachteilig ist, werden die Kupplungshälften mit einer Schutzfolie 8 gemäß Fig. 5 überzogen. Beim Zusammenfügen wird die Schutzfolie 8 gezielt zerstört, so daß die bislang hermetisch abgeschlossenen, d. h. nicht korrodierten Elemente der Kupplungshälften zusammengefügt werden. In einer weiteren Ausgestaltung sind Dichtelemente vorgesehen, die nach dem Zusammenfügen erneut eine hermetische Abdichtung bewirken.

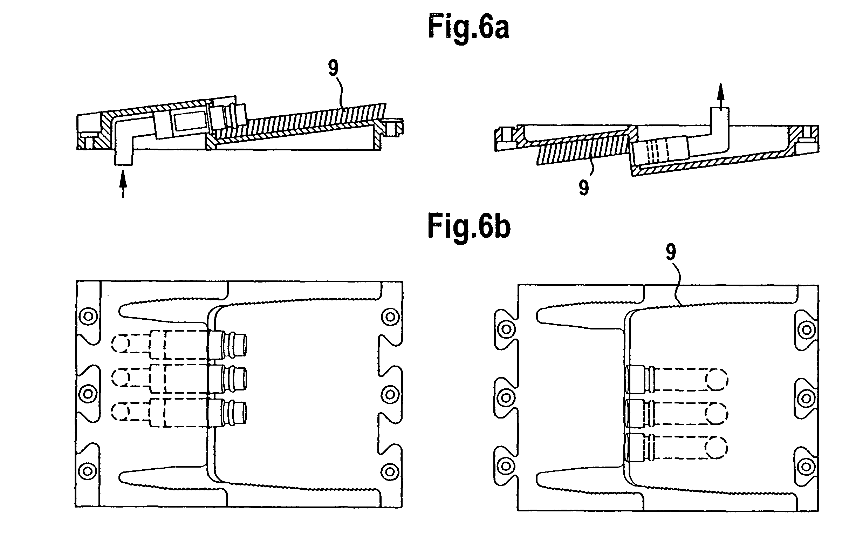

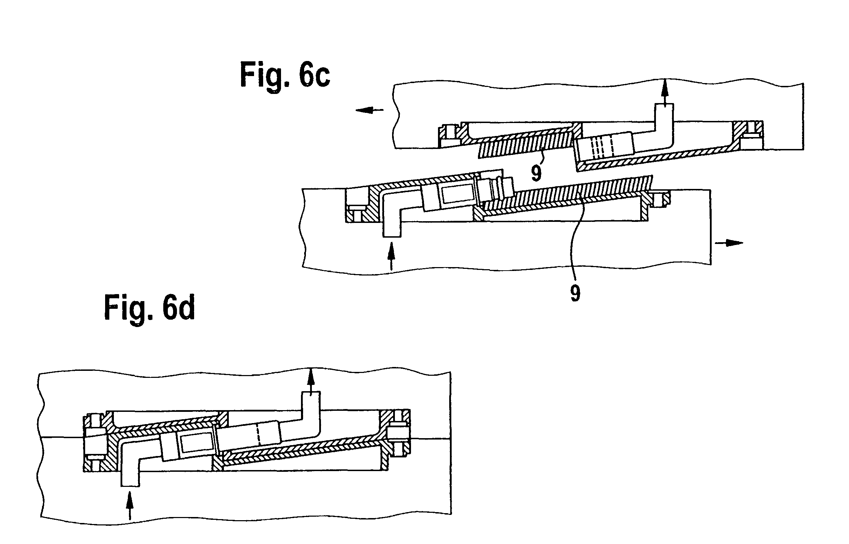

Die Fig. 6 zeigt eine einfache und sehr wirkungsvolle Maßnahme zum sicheren und dauerhaften Verbinden. Die Berührungsflächen der Zentriervorrichtung sind als vielkeilförmige Flächenverzahnung 9 ausgebildet. Wenn beim Zusammenfügen die Berührungsflächen aneinandergepreßt werden, verhaken sich die Zähne der Flächenverzahnung 9 und bleiben in dieser Lage, so daß eine form- und kraftschlüssige Verbindung entsteht. Der Fachmann weiß, daß dazu die Vielfachverzahnung unsymmetrisch ausgebildet werden muß, so daß der Verhakungseffekt nur in einer Richtung auftritt, d. h. im vorliegenden Beispiel beim Zusammenpressen der Berührungsflächen.

Die Fig. 1 bis 6 zeigen die verschiedenen Ausführungsformen der Erfindung an einer im wesentlichen ähnlichen Grundform der Kupplung. Die verschiedenen Phasen der Montage werden in anschaulichen Darstellungen gezeigt, so daß für den Fachmann auf Wiederholungen bei der Beschreibung verzichtet werden kann. Die nachfolgenden Beispiele zeigen, daß auch prinzipiell andere Kupplungsgrundformen zum Einsatz kommen können.

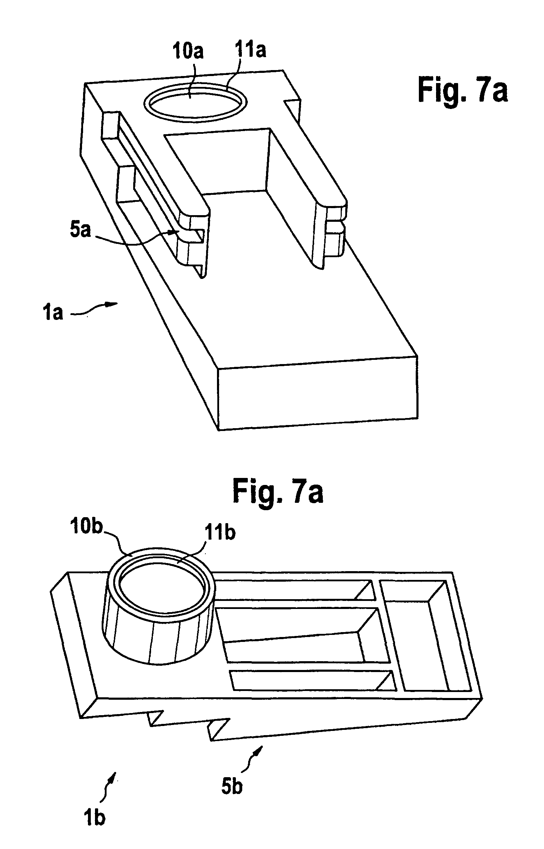

Die Fig. 7 zeigt eine Ausführungsform der Kupplung mit zwei Kupplungshälften 1a, 1b, wobei in dieser Ausführungsform lediglich ein Wasserrohr 10 verbunden wird. Wenn die Kupplungshälften zusammengesteckt sind, liegen die beiden Rohrabschnitte 10a, 10b übereinander. Zur Abdichtung ist eine Dichtungsanordnung 11a, 11b vorgesehen.

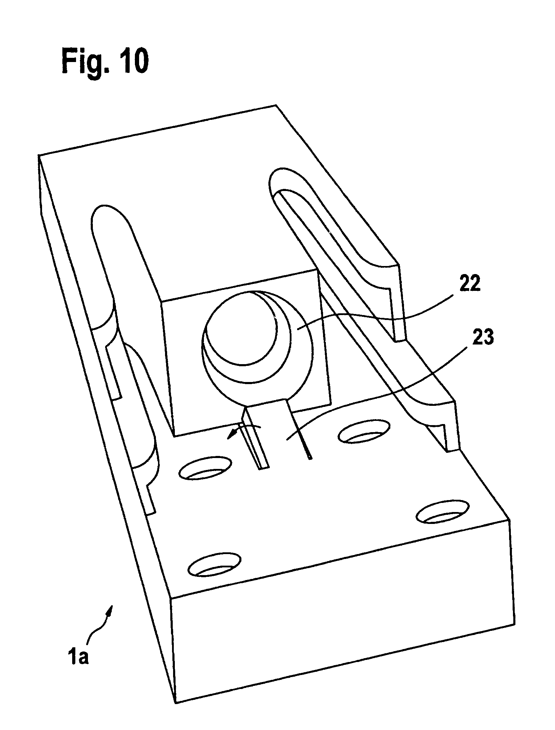

Die Fig. 10 zeigt eine Kupplungshälfte 1a mit einer integral ausgebildeten Wasserrohrkupplung 22. Durch die integrale Ausbildung wird ein separates Kupplungselement für die Wasserleitung eingespart. Wie aus der Abbildung erkennbar ist, bildet die Wasserrohrkupplung ein massives Zentralelement, das auch große mechanische Kräfte aufnehmen kann. Mit Bezugszeichen 23 ist schematisch eine federnde Sperrklappe gezeigt, die beim Zusammenkuppeln durch das Gegenstück in Pfeilrichtung gedrückt wird und im Endzustand in eine Ausnehmung des Gegenstückes einschnappt. Dadurch wird ein Lösen der Kupplung wirksam verhindert.

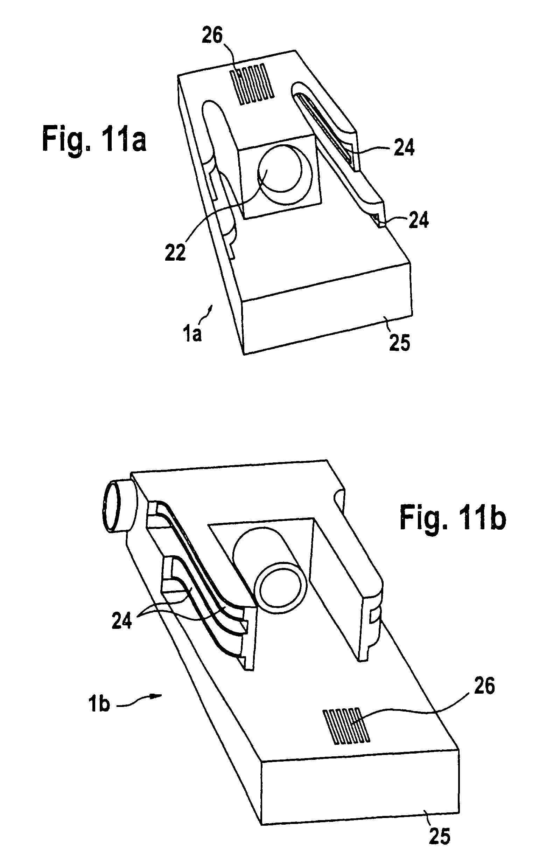

Die Fig. 11a zeigt ebenfalls eine erste Kupplungshälfte 1a mit einer integral ausgebildeten Wasserrohrkupplung 22. Zusätzlich sind innerhalb der Eingriffsnuten elektrische Kontakte 24 zur Übertragung von elektrischer Energie vorgesehen. Weiterhin sind auf dem rechteckigen Sockelabschnitt 25 eine Reihe von kleinen Kontaktelementen 26 angeordnet, die z. B. für die Übertragung von Sensorsignalen, wie z. B Temperatur, dienen können. Die Fig. 11b zeigt die dazu passende zweite Kupplungshälfte.

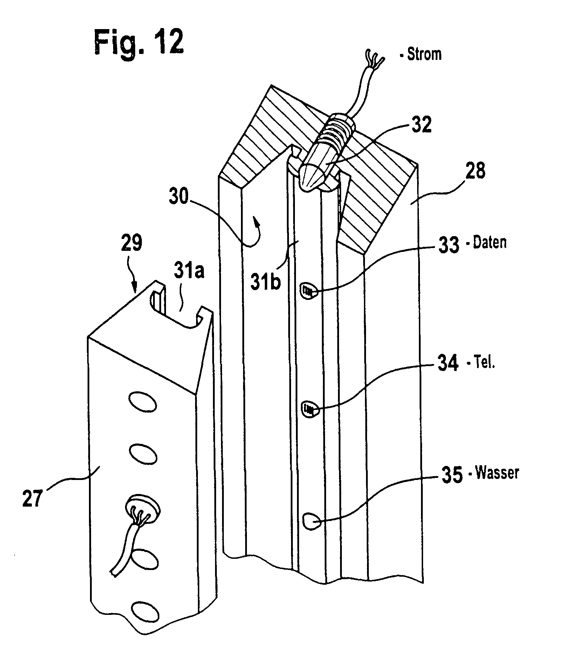

Die Fig. 12 zeigt eine weitere Ausführungsform der Erfindung. Die Kupplungshälften sind als keilförmige Profilstangen 27, 28 ausgebildet, wobei die erste Kupplungshälfte einen Außenkeil 29 und die zweite Kupplungshälfte einen Innenkeil 30 aufweist. Weiterhin ist eine formschlüssig wirkende Verbindungsvorrichtung 31a, b vorgesehen, deren Wirkungsweise aus der Fig. 12 entnehmbar ist. Wenn beide Profilstangen in Eingriff gebracht werden, umgreift die Verbindungsvorrichtung 31a die Verbindungsvorrichtung 31b. Die Dimensionierung dieser Verbindungsvorrichtung 31 wird nicht näher erläutert, da die Konstruktionen derartiger Click-Verbindungen hinreichend bekannt sind und je nach Erfordernis gestaltet werden können. Innerhalb der Verbindungsvorrichtung sind Leitungskupplungselemente 32 bis 35 vorgesehen, die beim Zusammenkuppeln der Profilstangen 27, 28 miteinander verbunden werden.

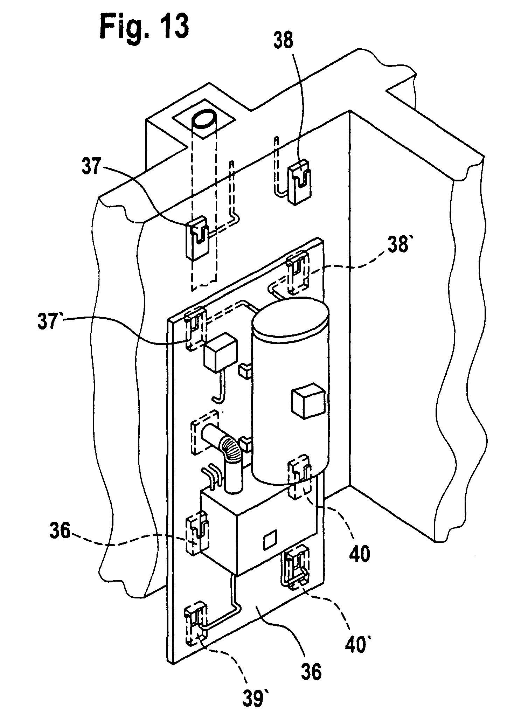

Die Fig. 13 zeigt eine mögliche Anwendung der Erfindung im Bereich der Heizungs- und Wasserinstallation. Auf einer Basisplatte 36 sind diverse Aggregate angeordnet. In der Wand sind 4 erfindungsgemäße Kupplungen 37, 38 (39, 40 nicht sichtbar) angeordnet, die mit verschiedenen, in der Wand verlaufenden Leitungen verbunden sind. Auf der Basisplatte 36 sind zu den Kupplungen 37 bis 40 die dazu passenden Gegenstücke angeordnet. Somit kann die Basisplatte 36 beim Hersteller vollständig, ggf. sogar automatisiert installiert werden. Vor Ort wird die installierte Basisplatte einfach eingehängt. Es wird deutlich, daß dadurch die Montagekosten vor Ort erheblich gesenkt werden können. Weiterhin erfolgt die Installation in sehr kurzer Zeit und die Gefahr von Fehlverbindungen oder Fehlschaltungen ist ausgeschlossen.

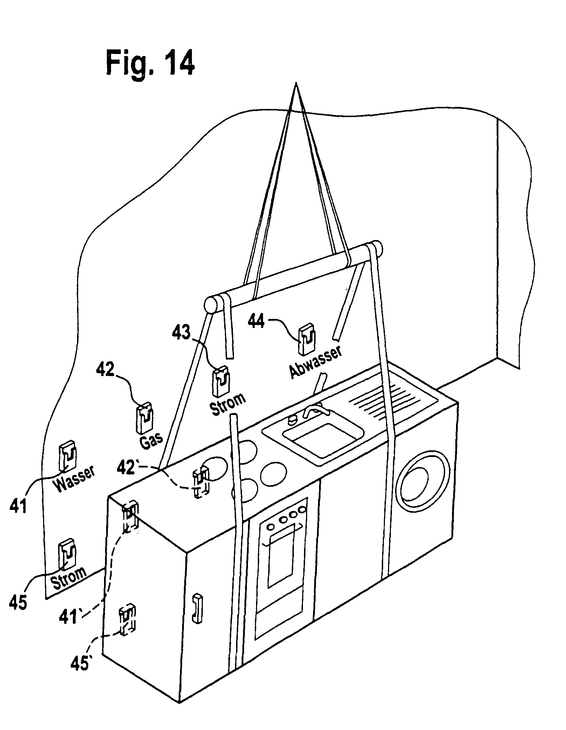

Die Fig. 14 zeigt eine weitere mögliche Anwendung der Erfindung im Küchenbereich. Aus der Zeichnung ist ohne nähere Erläuterungen entnehmbar, daß ein kompletter Küchenblock, bestehend aus Kühlschrank, Elektroherd und Spüle mit Geschirrspüler analog zu den Erläuterungen der Fig. 13 an eine Wand gehängt werden kann, wobei die sichtbaren Kupplungen mit den Bezugszeichen 41 bis 45 bezeichnet sind.

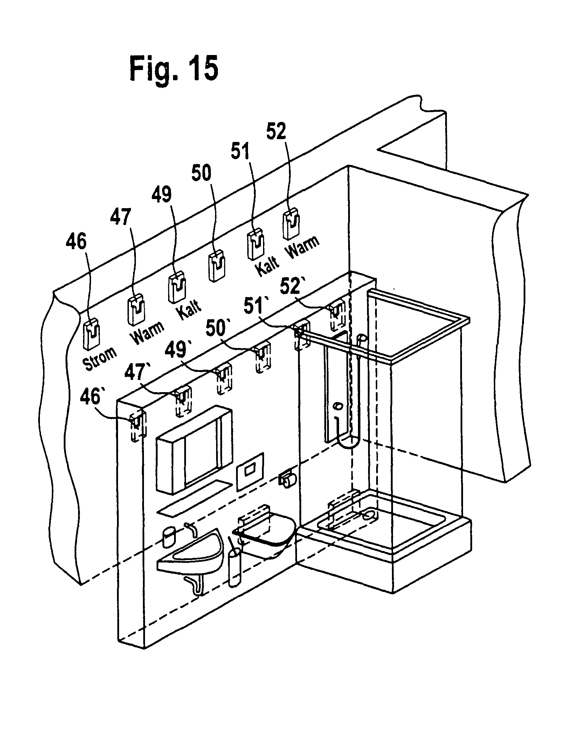

Die Fig. 15 zeigt eine weitere mögliche Anwendung der Erfindung im Badbereich. Aus der Zeichnung ist ohne nähere Erläuterungen entnehmbar, daß ein kompletter Sanitärzelleblock, bestehend aus Duschkabine, Toilette, Waschbecken mit Spiegelschrank analog zu den Erläuterungen der Fig. 13 mit geringem Aufwand an einer Wand befestigt werden kann, wobei die Kupplungen mit den Bezugszeichen 46 bis 52 bezeichnet sind.

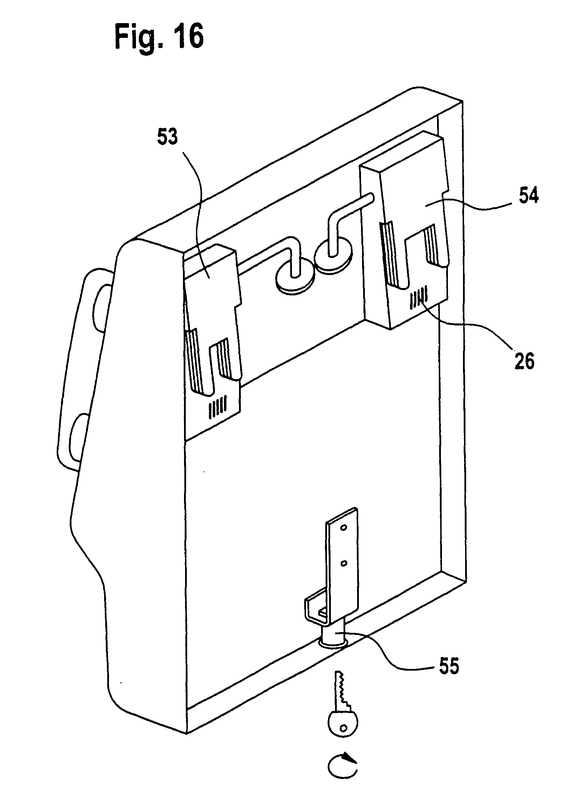

Die Fig. 16 zeigt eine weitere mögliche Anwendung der Erfindung bei der Installation von öffentlichen Telefoneinrichtungen. Es sind zwei erfindungsgemäße Kupplungen 53, 54 und eine abschließbare Verriegelungsvorrichtung 55 an der Rückseite der Telefoneinrichtung angeordnet. So kann die Telefoneinrichtung bei einem Defekt schnell ausgetauscht werden und ist gegen Diebstahl mittels der Verriegelungsvorrichtung gesichert.

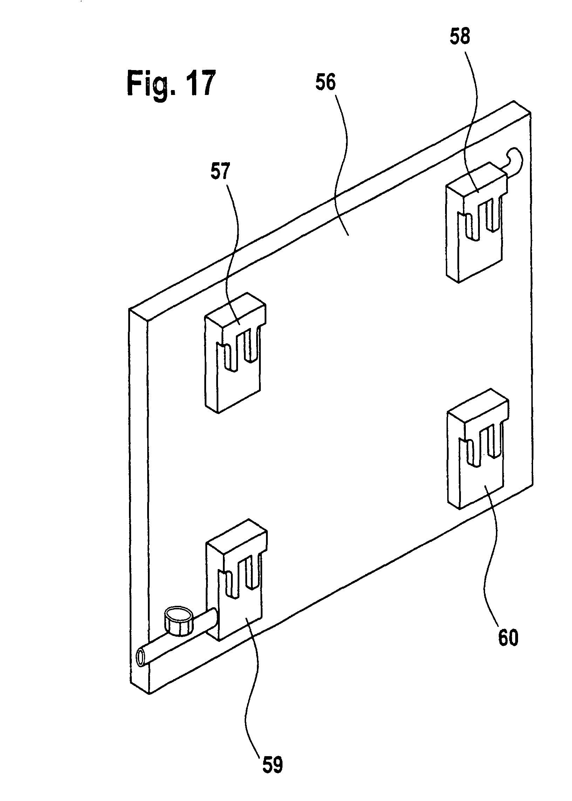

Die Fig. 17 zeigt eine weitere mögliche Anwendung der Erfindung im Heizungsbereich. Auf eine an einer Wand befestigte Grundplatte 56 sind Kupplungen 57 bis 60 vorgesehen, wobei die Kupplungen 58 und 59 erfindungsgemäß ausgebildet sind. Es ist offensichtlich, daß mit dieser Anordnung Plattenheizkörper sehr schnell montiert oder bei einem Defekt ausgetauscht werden können.

Abschließend ist zu betonen, daß mit den in der Beschreibung und den Ausführungsbeispielen offenbarten Merkmalen die technische Lehre der Erfindung sehr umfassend offenbart ist. Der Fachmann kann jederzeit bei Kenntnis dieser technischen Lehre die Erfindung abwandeln oder speziellen Erfordernissen anpassen, ohne das er dazu erfinderisch tätig werden muß.

## Patentansprüche

1. Verbindungselement zum mechanischen Verbinden von Bauteilen oder Baugruppen, wobei das Verbindungselement zwei durch eine Fügebewegung in Eingriff und betriebsfertigen Zustand bringbare Kupplungshälften (1a, 1b) aufweist, die an den zu verbindenden Bauteilen oder Baugruppen mittels Befestigungsmittel befestigbar sind, wobei die Kupplungshälften (1a, 1b) und die Befestigungsmittel so dimensioniert sind, dass bei Einwirkung von Betriebskräften ein vorbestimmter mechanisch stabiler Zustand der verbundenen Bauteile oder Baugruppen gewährleistet bleibt, **dadurch gekennzeichnet, dass**
- innerhalb der Kupplungshälften (1a, 1b) Leitungskupplungshälften (2a, 2b, 10, 22, 32, 33, 34, 35) zum Verbinden von Flüssigkeitsleitungen oder Gasleitungen oder elektrischen Leitungen oder Signalleitungen angeordnet sind, wobei im Betriebszustand die Leitungskupplungshälften mit den Endabschnitten der zu verbindenden Leitungen verbunden sind und die Kupplungshälften Ausnehmungen aufweisen, durch die die Leitungen nach außen geführt sind, und
- die Kupplungshälften im betriebsbedingten Verbundzustand als Gehäuse für die Leitungskupplungshälften (2a, 2b, 10, 22, 32, 33, 34, 35) ausgebildet sind, wobei das Gehäuse so geformt ist, dass die Leitungskupplungshälften und die Endabschnitte der zu verbindenden Leitungen vor schädigenden Betriebs- oder Umwelteinflüssen geschützt sind.

2. Verbindungselement nach Anspruch 1, **dadurch gekennzeichnet, daß** das Verbindungselement so gestaltet ist, daß die Richtung der Fügebewegung der Kupplungshälften mit der Richtung der Fügebewegung zum Verbinden der Leitungskupplungshälften **(2a, 2b, 32, 33, 34, 35)** übereinstimmt.

3. Verbindungselement nach Anspruch 1, **dadurch gekennzeichnet, daß** das Verbindungselement so gestaltet ist, daß die Richtung der Fügebewegung der Kupplungshälften ungleich der Richtung der Fügebewegung zum Verbinden der Leitungskupplungshälften ist.

4. Verbindungselement nach Anspruch 2, **dadurch gekennzeichnet, daß** das Verbindungselement so gestaltet ist, daß die Leitungskupplungshälften gleichzeitig mit den Kupplungshälften zusammengefügt werden.

5. Verbindungselement nach Anspruch 2 oder 3, **dadurch gekennzeichnet, daß** das Verbindungselement so gestaltet ist, daß beim Verbinden zuerst die Kupplungshälften vollständig verbunden werden und danach die Leitungskupplungshälften zusammengefügt werden.

6. Verbindungselement nach Anspruch 5, **dadurch gekennzeichnet, daß** das Verbindungselement so gestaltet ist, daß die Leitungskupplungshälften mittels eines Verbindungsmechanismus einzeln oder gemeinsam verbindbar sind, wobei der Verbindungsmechanismus nachfolgende Merkmale aufweist:
- einen Schlittenmechanismus (**14**), um die Leitungskupplungshälften zusammenzuführen, und
- einen Antriebsmechanismus (**13,14,15,16**), um den Schlittenmechanismus anzutreiben.

7. Verbindungselement nach Anspruch 6, **dadurch gekennzeichnet, daß** der Antriebsmechanismus einen Federmechanismus aufweist, wobei eine blockierte, vorgespannte Feder (**18**) nach dem Lösen der Blockade (**19**) der Feder (**18**) automatisch oder von Hand den Schlittenmechanismus betätigt.

8. Verbindungselement nach Anspruch 6, **dadurch gekennzeichnet, daß** der Antriebsmechanismus (**17**) von Hand betätigbar ist.

9. Verbindungselement nach Anspruch 4, **dadurch gekennzeichnet, daß** die Kupplungshälften innenseitig angeordnete Nuten und dazu passende Vorsprünge aufweisen, die im Verbundzustand des Verbindungselements ineinandergreifen, wobei vorbestimmte Abschnitte der Nuten und Vorsprünge in enger Lagebeziehung zueinander stehen und an den vorbestimmten Abschnitten Kontaktelemente (**24**) zur Herstellung einer elektrischen Verbindung vorgesehen sind.

10. Verbindungselement nach Anspruch 4, **dadurch gekennzeichnet, daß** innerhalb der Kupplungshälften Flächenabschnitte angeordnet sind, die im Verbundzustand der Kupplungshälften in enger Lagebeziehung zueinander stehen, wobei an diesen Flächenabschnitten Kontaktelemente (**26**) zur Herstellung einer Signalverbindung vorgesehen sind, wobei im Verbundzustand der Kupplungshälften sich die gegenüberliegenden Kontaktelemente berühren.

11. Verbindungselement nach einem der vorhergehenden Ansprüche, **dadurch gekennzeichnet, daß** die Kupplungshälften
- einen rechteckigen Sockelabschnitt aufweisen, in dem Befestigungslöcher vorgesehen sind, um die Kupplungshälfte auf einer Fläche oder in einer rechteckigen Ausnehmung oder in einer Nut des zu verbindenden Bauteils zu befestigen, und auf dem Sockelabschnitt
- eine Vielzahl von keilförmigen oder konischen Eingriffelementen (**5a**) und dazu passende keilförmige oder konusförmige Ausnehmungen (**5b**) ausgebildet sind.

12. Verbindungselement nach Anspruch 4 und Anspruch 11, **dadurch gekennzeichnet, daß** wenigstens ein Eingriffselementepaar als zusammensteckbare Rohrleitungskupplung (**10**) ausgebildet ist, die die Verbindung einer Flüssigkeits- oder Gasleitung bildet.

13. Verbindungselement nach einem der vorhergehenden Ansprüche, **dadurch gekennzeichnet, daß** eine mittels Druck betätigbare Verriegelungsvorrichtung (**6**) vorgesehen ist, die bei Druckbeaufschlagung mittels Arbeitsflüssigkeit oder -gas eine Verriegelung der Verbindung bewirkt.

14. Verbindungselement nach einem der vorhergehenden Ansprüche, **dadurch gekennzeichnet, daß** an den Kupplungshälften Fügepreßflächen vorgesehen sind, auf denen druckaktivierbarer Klebstoff **(7)** aufgetragen ist, so daß beim Zusammenfügen der Kupplungshälften **(1a, 1b)** der Klebstoff **(7)** aktiviert wird und die Fügepreßflächen dauerhaft miteinander verklebt werden.

15. Verbindungskonstruktion nach Anspruch 1 bis 13, **dadurch gekennzeichnet, daß** an den Kupplungshälften Fügepreßflächen vorgesehen sind, auf denen eine unsymmetrische Flächenverzahnung (**9**) vorgesehen ist, die beim Zusammenpressen eine einseitig wirkende Kraft- und Formschlußverbindung bildet.

16. Verbindungskonstruktion nach einem der vorhergehenden Ansprüche, **dadurch gekennzeichnet, daß** die Kontakte der elektrischen Leitungskupplungshälften mittels einer Membran (**8**) hermetisch gekapselt sind, wobei beim Zusammenfügen der Leitungskupplungshälften die Membran (**8**) zerstört wird.

17. Verbindungskonstruktion nach Anspruch 16, **dadurch gekennzeichnet, daß** in der hermetisch gekapselten Leitungskupplungshälfte eine feuchtigkeitsbindende Substanz eingebracht ist.

## Claims

1. Connection element for mechanical connection of building components or subassemblies, the connection element having two coupling halves (1a, 1b), which can be brought by a joining movement into engagement and an operational state, said coupling halves being fixable on the building components or subassemblies to be connected by means of fixing means, the coupling halves (1a, 1b) and the fixing means being dimensioned such that, under the effect of operational forces, a predetermined mechanically stable state of the connected building components or subassemblies remains ensured, **characterised in that-**
- within the coupling halves (1a, 1b), line coupling halves (2a, 2b, 10, 22, 32, 33, 34, 35) for connecting liquid lines or gas lines or electrical lines or signal lines are disposed, the line coupling halves being connected in the operational state to the end portions of the lines to be connected and the coupling halves having recesses, through which the lines are guided to the exterior, and
- the coupling halves in the operational connected state are configured as a housing for the line coupling halves (2a, 2b, 10, 22, 32, 33, 34, 35), the housing being shaped such that the line coupling halves and the end portions of the lines to be connected are protected from damaging operational or environmental influences.

2. Connection element according to claim 1, **characterised in that** the connection element is formed such that the direction of the joining movement of the coupling halves corresponds to the direction of the joining movement for connecting the line coupling halves (2a, 2b, 32, 33, 34, 35).

3. Connection element according to claim 1, **characterised in that** the connection element is formed such that the direction of the joining movement of the coupling halves is not identical to the direction of the joining movement for connecting the line coupling halves.

4. Connection element according to claim 2, **characterised in that** the connection element is formed such that the line coupling halves are joined simultaneously with the coupling halves.

5. Connection element according to claim 2 or 3, **characterised in that** the connection element is formed such that, during connection, firstly the coupling halves are connected completely and thereafter the line coupling halves are joined.

6. Connection element according to claim 5, **characterised in that** the connection element is formed such that the line coupling halves are connectable individually or together by means of a connection mechanism, the connection mechanism having the following features:
- a slide mechanism (14) in order to bring together the line coupling halves, and
- a drive mechanism (13, 14, 15, 16) in order to actuate the slide mechanism.

7. Connection element according to claim 6, **characterised in that** the drive mechanism has a spring mechanism, a blocked, pretensioned spring (18) actuating the slide mechanism automatically or by hand after releasing the blocking (19) of the spring (18).

8. Connection element according to claim 6, **characterised in that** the drive mechanism (17) is actuatable by hand.

9. Connection element according to claim 4, **characterised in that** the coupling halves have grooves disposed internally and projections which are adapted thereto, said grooves and projections engaging in each other in the connected state of the connection element, predetermined portions of the grooves and projections being in close positional relationship with each other and contact elements (24) being provided on the predetermined portions in order to produce an electrical connection.

10. Connection element according to claim 4, **characterised in that** surface portions are disposed within the coupling halves, said surface portions being in close positional relationship with each other in the connected state of the coupling halves, contact elements (26) being provided on these surface portions in order to produce a signal connection, the oppositely situated contact elements being in contact in the connected state of the coupling halves.

11. Connection element according to one of the preceding claims, **characterised in that** the coupling halves
- have a rectangular base portion, in which fixing holes are provided in order to fix the coupling halves to a surface or in a rectangular recess or in a groove of the building component to be connected, and on the base portion
- a multiplicity of wedge-shaped or conical engagement elements (5a) and wedge-shaped or conical recesses (5b), which are adapted thereto, are configured.

12. Connection element according to claim 4 and claim 11, **characterised in that** at least one engagement element pair is configured as a connectable pipeline coupling (10) which forms the connection of a liquid or gas line.

13. Connection element according to one of the preceding claims, **characterised in that** a locking device (6), which is actuatable by means of pressure, is provided, said locking device effecting locking of the connection when pressure is applied by means of operating liquid or gas.

14. Connection element according to one of the preceding claims, **characterised in that** joining press faces are provided on the coupling halves, on which faces pressure-activatable adhesive (7) is applied so that, when joining the coupling halves (1a, 1b), the adhesive (7) is activated and the joining press faces are glued to each other permanently.

15. Connection construction according to claim 1 to 13, **characterised in that** joining press faces are provided on the coupling halves, on which faces an asymmetrical surface toothing (9) is provided which forms a frictional and form-fitting connection acting on one side during compression.

16. Connection construction according to one of the preceding claims, **characterised in that** the contacts of the electrical line coupling halves are enclosed hermetically by means of a membrane (8), the membrane (8) being destroyed during joining of the line coupling halves.

17. Connection construction according to claim 16, **characterised in that** a moisture-absorbing substance is introduced into the hermetically enclosed line coupling half.

## Revendications

1. Elément d'assemblage pour la jonction mécanique de composants ou d'ensembles, l'élément d'assemblage présentant deux demi-accouplements (1a, 1b) pouvant être mis en prise et rendus fonctionnels par un mouvement d'emboîtement, lesquels peuvent être fixés aux composants ou ensembles à assembler par des moyens de fixation, les demi-accouplements (1a, 1b) et les moyens de fixation étant dimensionnés de manière à garantir un état mécanique stable prédéfini des composants ou ensembles assemblés lorsqu'ils sont soumis à des efforts d'exploitation, **caractérisé par le fait que**
- des demi-accouplements de lignes ou de conduites (2a, 2b, 10, 22, 32, 33, 34, 35) pour le raccordement de conduites de liquides, de conduites de gaz, de câbles ou lignes électriques ou de lignes de transmission de signaux sont disposés à l'intérieur des demi-accouplements (1a, 1b), les demi-accouplements de lignes étant reliés à l'état fonctionnel aux sections terminales des lignes à raccorder et les demi-accouplements présentant des évidements à travers lesquels les lignes sont menées vers l'extérieur, et
- les demi-accouplements forment à l'état assemblé fonctionnel un boîtier pour les demi-accouplements de lignes (2a, 2b, 10, 22, 32, 33, 34, 35), le boîtier étant formé de telle manière que les demi-accouplements de lignes et les sections terminales des lignes ou conduites à raccorder sont protégés des influences d'exploitation ou d'environnement nuisibles.

2. Elément d'assemblage selon la revendication 1, **caractérisé par le fait que** l'élément d'assemblage est conçu de telle manière que la direction du mouvement d'emboîtement des demi-accouplements coïncide avec la direction du mouvement d'emboîtement des demi-accouplements de lignes (2a, 2b, 32, 33, 34, 35).

3. Elément d'assemblage selon la revendication 1, **caractérisé par le fait que** l'élément d'assemblage est conçu de telle manière que la direction du mouvement d'emboîtement des demi-accouplements est différent de la direction du mouvement d'emboîtement des demi-accouplements de lignes.

4. Elément d'assemblage selon la revendication 2, **caractérisé par le fait que** l'élément d'assemblage est conçu de telle manière que les demi-accouplements de lignes sont assemblés en même temps que les demi-accouplements.

5. Elément d'assemblage selon la revendication 2 ou 3, **caractérisé par le fait que** l'élément d'assemblage est conçu de telle manière que, lors du raccordement; les demi-accouplements sont d'abord entièrement raccordés et qu'ensuite les demi-accouplements de lignes sont assemblés.

6. Elément d'assemblage selon la revendication 5, **caractérisé par le fait que** l'élément d'assemblage est conçu de telle manière que les demi-accouplements de lignes peuvent être raccordés individuellement ou ensemble au moyen d'un mécanisme de raccordement, le mécanisme de raccordement présentant les caractéristiques suivantes :
- un mécanisme à chariot (14) pour joindre les demi-accouplements de lignes et
- un mécanisme d'entraînement (13, 14, 15, 16) pour entraîner le mécanisme à chariot.

7. Elément d'assemblage selon la revendication 6, **caractérisé par le fait que** le mécanisme d'entraînement présente un mécanisme à ressort, un ressort (18) bloqué, précontraint, actionnant automatiquement ou à la main le mécanisme à chariot après relâchement du blocage (19) du ressort (18).

8. Elément d'assemblage selon la revendication 6, **caractérisé par le fait que** le mécanisme d'entraînement (17) peut être actionné à la main.

9. Elément d'assemblage selon la revendication 4, **caractérisé par le fait que** les demi-accouplements présentent des rainures du côté intérieur et des saillies correspondantes à celles-ci qui s'engrènent à l'état assemblé de l'élément d'assemblage, des sections prédéfinies des rainures et des saillies étant en étroite relation de position mutuelle et des éléments de contact (24) permettant d'établir une liaison électrique étant prévus sur ces sections prédéfinies.

10. Elément d'assemblage selon la revendication 4, **caractérisé par le fait que** des sections planes sont disposées à l'intérieur des demi-accouplements, qui sont en étroite relation de position mutuelle à l'état assemblé des demi-accouplements, des éléments de contact (26) permettant d'établir une liaison de signaux étant prévus sur ces sections planes, les éléments de contact opposés se touchant à l'état assemblé des demi-accouplements.

11. Elément d'assemblage selon l'une des revendications précédentes, **caractérisé par le fait que** les demi-accouplements
- présentent une section de socle rectangulaire dans laquelle sont prévus des trous de fixation pour fixer le demi-accouplement sur une surface ou dans un évidement rectangulaire ou dans une rainure du composant à assembler, et que sur la section de socle
- il est formé une pluralité d'éléments d'engrènement (5a) en forme de coin ou coniques et des évidements correspondants (5b) en forme de coin ou coniques.

12. Elément d'assemblage selon la revendication 4 et la revendication 11, **caractérisé par le fait qu'**il est formé au moins une paire d'éléments d'engrènement comme accouplement de tuyauterie connectable (10) qui forme le raccordement d'une conduite de liquide ou de gaz.

13. Elément d'assemblage selon l'une des revendications précédentes, **caractérisé par le fait qu'**il est prévu un dispositif de verrouillage (6) actionnable par la pression qui provoque un verrouillage de l'assemblage lorsqu'il est alimenté en pression par un liquide ou un gaz de travail.

14. Elément d'assemblage selon l'une des revendications précédentes, **caractérisé par le fait qu'**il est prévu sur les demi-accouplements des surfaces d'assemblage par pression sur lesquelles on applique une colle activable par la pression (7), de sorte que la colle (7) est activée lors de l'assemblage des demi-accouplements (1a, 1b) et que les surfaces d'assemblage par pression sont durablement collées ensemble.

15. Construction d'assemblage selon les revendications 1 à 13, **caractérisée par le fait qu'**il est prévu sur les demi-accouplements des surfaces d'assemblage par pression sur lesquelles il est prévu une denture plane asymétrique (9) qui forme une liaison par adhérence et par ajustement géométrique agissant de manière asymétrique lors de la compression.

16. Construction d'assemblage selon l'une des revendications précédentes, **caractérisée par le fait que** les contacts des demi-accouplements de lignes électriques sont encapsulés de façon hermétique au moyen d'une membrane (8), la membrane (8) étant détruite lors de l'assemblage des demi-accouplements de lignes.

17. Construction d'assemblage selon la revendication 16, **caractérisée par le fait que** l'on introduit une substance absorbant l'humidité dans le demi-accouplement de lignes encapsulé de façon hermétique.
